# EUROPEAN PATENT SPECIFICATION

(11) **EP 3 585 220 B1**
(45) Date of publication and mention of the grant of the patent: **20.03.2024**
(21) Application number: 18707676.5
(22) Date of filing: 22.02.2018
(51) Int. Cl.: A47J 36/24, A47J 31/00

(54) **CONTAINER FOR MIXING AND DRINKING A BEVERAGE**
BEHÄLTER ZUM MISCHEN UND TRINKEN EINES GETRÄNKS
RÉCIPIENT POUR MÉLANGER ET CONSOMMER UNE BOISSON

(30) Priority: 23.02.2017 EP 17157538
(43) Date of publication of application: 01.01.2020
(73) Proprietor: Société des Produits Nestlé S.A., 1800 Vevey (CH)
(72) Inventor: BEAUSIRE, Cédric, 1372 Bavois (CH); WYTTENBACH, Damien, 1400 Yverdon-les-Bains (CH); RAWYLER, Fabien, 1566 Saint-Aubin (CH)
(74) Representative: Pasquino, Fabio
(86) International application number: PCT/EP2018/054332
(87) International publication number: WO 2018/153951

(56) References cited:
- WO-A1-02/13666
- WO-A2-2004/014739
- GB-A- 2 525 652
- US-A1- 2003 089 714
- US-A1- 2004 118 847
- US-A1- 2013 146 593

## Description

### Field of the invention

The present invention relates to a container for mixing and drinking a hot beverage.

### Background of the invention

It is known to rapidly prepare a beverage by dissolving a soluble beverage powder like instant coffee with hot water in a drinking cup. The soluble beverage is usually dosed from a jar or from a stick and water is heated in a kettle. This preparation is fully convenient and rapid, yet it rarely enables the optimal reconstitution of the beverage.

It has been proposed to improve such a preparation by providing mixing containers. These containers usually consist in a drinking container comprising a stirring device at the bottom of the container and optionally a heater in the floor or sidewalls of the container. The stirring device improves the dissolution of the beverage powder whatever the temperature of the diluent introduced therewith, and eventually enables frothing of the beverage. The heater enables the use of cold diluent and the use of a kettle to heat water is not needed any longer.

In order to enable the user to drink his/her beverage on the go, the container has been improved with a lid in order to hermetically close the container during travel.

This lid shall answer different needs.

First the lid shall comprise a beverage outlet opening in order to enable the user to drink the beverage without separating the lid from the container. This opening shall be designed to be either opened during drinking operation or closed during travelling.

Secondly, the lid shall comprise an air inlet opening in order to enable air to enter the container while the user drinks and to facilitate drinking operation. Again, this opening shall be designed to be either opened during drinking operation or closed during travelling.

Above openings are currently known in existing travel mugs, as described for example in EP 2 432 349 or US 2013/0146593. WO 2004/014739 A2 discloses a device for mixing, storing and drinking a beverage according to the preamble of claim 1.

In the case of a container configured for mixing a hot beverage, a particular issue relates to the raise of beverage in the container during mixing. As the mixing is frequently implemented by means of a rotating whipper, beverage rotates and forms a raising swirl along the walls of the container. Depending on the volume of beverage and the speed of rotation, the beverage can reach the upper edge of the container and can overflow. Accordingly, the beverage operation shall occurred when the container is closed by the lid.

Yet, due to the heating of the beverage during preparation or due to the fact that hot liquid has been introduced in the container for the preparation, a potential raise of pressure may occur too and, for this, reason, it may be preferable to prepare the beverage while providing a steam or air outlet through the lid. Otherwise, steam and beverage may suddenly escape from the beverage outlet when the consumer opens the lid to drink and may injure him or her.

Accordingly, during beverage preparation, the lid shall be simultaneously closed to avoid beverage overflow and open to let steam or air escape.

An object of the present invention is to provide a container for mixing and drinking a hot beverage comprising a lid able to answer the above issues occurring during beverage preparation, during travel and during drinking operation.

### Summary of the invention

In a first aspect of the invention, there is provided a device for mixing, storing and drinking a beverage according to claim 1. Preferred embodiments are provided in the dependent claims.

The device is configured to enable a consumer to drink a beverage prepared directly from the device. The device is essentially a drinking container like a cup, a glass or a mug.

Accordingly, the device comprises a container body. The container body comprises a floor and a sidewall extending longitudinally and upwardly from the floor to an upper edge. The container body enables the introduction of beverage ingredients and the preparation of a beverage by mixing of said ingredients.

The beverage ingredients can comprise beverage powders, beverage concentrates and diluents like water, milk. The beverage powders can be instant coffee powder, 3-in-1 coffee mixes, milk powder, instant tea powder, chocolate powder, soup powder. The beverage concentrates can be coffee concentrate, tea concentrate, chocolate concentrate, syrups. Generally the container body presents an internal volume configured for preparing a beverage for one person, that is to say the volume of a mug. The container body can present an internal volume of about 300 ml. Such an internal volume enables the preparation of beverages with a volume of about 200 ml since the liquid is able to swirl in the container body.

The device comprises a mixing device positioned within the container body. This mixing device is configured for mixing the beverage ingredients introduced in the container body. This mixing device can be a blade, a whipper, a stirrer or any equivalent device for agitating a beverage. The mixing device is generally positioned on or close to the floor of the container body. Generally the mixing device is configured for rotating around the longitudinal axis of the container body. As a result, the mixing of the beverage induces the formation of a swirl of beverage raising along the side wall of the container. Depending on the speed of the mixing device and the volume of beverage, the resulting swirl can reach the upper edge of the side wall of the container body.

The mixing device is generally moved by a motor. The motor is generally a rotating motor comprising a drive shaft cooperating directly or indirectly with the mixing device through the floor of the container body.

According to one mode, the mixing device can be mechanically attached or connectable to the shaft of the motor.

According to another mode, the motor can drive the mixing device through a magnetic drive effect through the floor of the container body.

According to the preferred embodiment, the device comprises the motor designed to move the mixing device.

According to a less preferred embodiment, the device can be deprived of motor. In this embodiment, the motor can be comprised in a docking station designed for cooperating with the beverage heating, mixing, storing and drinking device. Once the mixing operation is terminated, the device can be removed from the docking station to travel and drink.

Preferably, the device comprises a heating device. This heating device heats the beverage ingredients and the resulting beverage hold in the container body.

The heating device can be positioned on the external sides of the container body, for example the heating device can be a heating resistive ring, or the heating device can be positioned at the bottom of the container body, for example the heating device can be a heating stick or a serigraphic heating plate.

As a result of the heating, beverage can vaporise and pressure can raise inside the body container.

The device comprises a removable lid configured for cooperating with the upper edge of the container body. The lid is removable in order to enable the introduction of the beverage ingredients and the cleaning of the device. Once the lid cooperates with the upper edge, the lid closes the container body hermetically. Usually the lid and the container upper edge cooperate through screwing means. Yet any other means like raised parts slidably engaging with cooperating slots or cooperating parts engaging by snap fitting can be implemented.

The lid comprises at least two openings. These openings are holes traversing the lid from the bottom to the top and enabling fluid communication between the container body and the atmosphere. On account of their respective functions, these openings are positioned at different distances from the edge of the lid.

The first opening is configured as a beverage outlet. Its function is to enable the customer to sip the beverage. It is positioned close to the edge of the lid. It is preferably sufficiently large to dispense a drinking flow of beverage.

The second opening is configured as an air port. Its main function is to enable pressurised air or gases to escape from the container body. This second opening is positioned far from the edge of the lid. Compared to the first opening, it is positioned at a distance closer to the centre of the lid. It is preferably positioned close to the centre of the lid, even more preferably at the centre of the lid. Consequently, during mixing operation, there is less risk that the swirl of beverage rising along the lateral wall of the container body reaches this second opening and escapes therefrom. Preferably, this second opening presents a small cross section compared to the first opening.

The lid comprises a first member configured for alternatively closing or opening the first opening and movable between a first closing position and a second opening position.

The function of this first member is to close the beverage outlet during the steps there is a risk the beverage unexpectedly overflows, in particular during mixing operation or during travelling. On the contrary, the first member enables the beverage outlet opening during drinking.

Preferably, the first movable member comprises a plug adapted to locate in the first opening of the lid when the first member is in its first closing position. The plug and the first opening are similar in shape and the plug closes the opening. The plug and the first opening have cooperating engagement parts.

The lid comprises a second member configured for alternatively closing or opening the second opening and movable between a first closing position and a second opening position. The function of this second member is to close the air port during the steps there is a risk the beverage unexpectedly overflows therethrough, that is during travelling. On the contrary, the second member enables the opening of the air port during beverage mixing enabling the release of pressure without any risk that the beverage flows therethrough.

Preferably, the second movable member comprises a plug adapted to locate in the second opening of the lid when the second member is in its first closing position. The plug and the second opening are similar in shape and the plug closes the opening. The plug and the second opening have cooperating engagement parts

Generally, when the first member is in the first closing position of said first member, the second member is freely movable between the first position of said second member and the second position of said second member. Accordingly, due to this freedom of the second member, the beverage can be safely mixed while avoiding overpressure and safely transported afterwards while avoiding beverage escape by keeping the beverage outlet closed.

Each of the first and second members are attached to the lid and movable to seal or unseal the respective first and second openings while remaining attached to the lid.

The first and the second members can be made movable according to any kind of movement. Each member can move according to a movement different from the other member.

The movement can be configured so that the member moves away from the surface of the lid. According to one mode, the movement can be a rotation around an axis parallel to the surface of the lid. Preferably, at least one of the movable members is pivotally mounted on the lid, even more preferably both movable members are pivotally mounted on the lid. Alternatively, the movement can be a sliding movement of at least one of the members along the surface of the lid. This sliding movement along the surface of the lid can be a translation or this sliding movement or can be a rotation around an axis perpendicular to the surface of the lid.

Preferably, the first and the second members are configured so that the movements of the first and the second members are independent from one another. As a result, the user is able to move each member from one position to another without moving the other member.

Accordingly, the movement of the first member enables the simultaneous opening of the first and the third openings when it is positioned in its opening position and enables the simultaneous closing of the first and the third openings when it is positioned in its closing position. As a result, while the consumer drinks, the third opening enables the introduction of air in the container body to compensate the volume of beverage out. Preferably the third opening presents a small cross section compared to the first opening.

Preferably, the first movable member comprises a plug adapted to locate in the third opening of the lid when the first member is in the first closing position of said first member. This plug and the third opening are similar in shape and the plug closes the opening. This plug and the third opening have cooperating engagement parts

According to the preferred embodiment:
- each of the first and the second members are pivotally mounted on the lid, and
- the second member is centred on the top of the lid, and
- the first member surrounds the second member, and
- the lid comprises a third opening configured as an air port and positioned under the first member, and
- the first and the second members are movable independently on each other.

According to a less preferred embodiment, the movement of the first member to the second opening position of said first member can induce the movement of the second member to the second opening position of said second member.

Accordingly, when the consumer moves the first member to its second opening position in order to open the beverage outlet and drink, the second member is moved to its second opening position which results in the opening of the air port positioned under the second member. Accordingly, while the consumer drinks, this air port enables the introduction of air in the container body to compensate the volume of beverage out.

According to such an embodiment:
- each of the first and second members can be pivotally attached to the upper surface of the lid, and
- the second member can partially lean on the first member so that, when the first member is moved to the second opening position of said first member, the first member simultaneously moves the second member to the second opening position of said second member. According to this particular embodiment, the air port closed by the second member acts as an air port for pressure release or as an air port for introduction of air depending on the operation implemented by the consumer (mixing or drinking).

Such a particular embodiment can relate to a device wherein :
- each of the first and the second members is pivotally mounted on the lid, and
- the second member is centred on the top of the lid, and
- the first member surrounds the second member at least partially, and
- a part of the bottom surface of the second member leans on a part of the upper surface of the first member.

According to the preferred embodiment, the lid can comprise a safety pressure valve. This valve guarantees that pressure can be released if the consumer forgets to open the second movable member during beverage preparation.

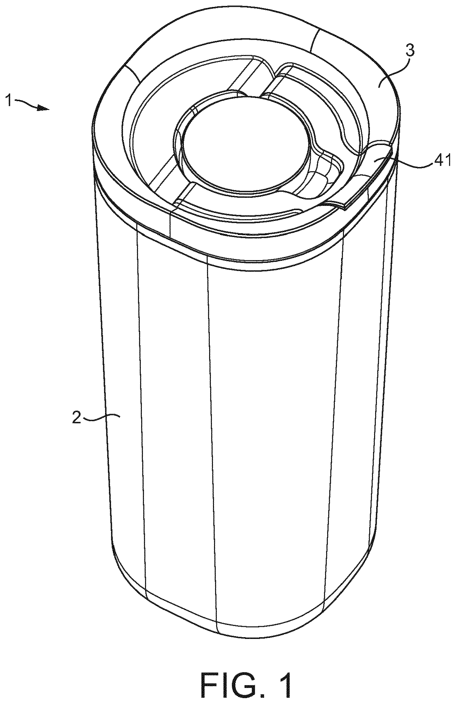

In the present application the terms "internal", "external", "top", "bottom" and "lateral" are used to describe the relational positioning of features of the invention. These terms should be understood to refer to the device in its normal orientation when used as shown in the figure 1.

Further objects and advantageous features of the invention will be apparent from the claims, from the detailed description, and annexed drawings.

### Brief description of the drawings

The characteristics and advantages of the invention will be better understood in relation to the following figures :
- Figure 1 is a perspective view of a device according to the invention,
- Figure 2 is a perspective view of the container body of the device of Figure 1,
- Figure 3 is a perspective view of the lid of the device of Figure 1,
- Figure 4 is a top view of the container body of Figure 2,
- Figure 5 is a bottom view of the lid of the device of Figure 1,
- Figure 6 is a top view of the lid of the device of Figure 1,
- Figure 7 is an isolated view of the second member of the lid of the device of Figure 1,
- Figure 8 is an isolated view of the first member of the lid of the device of Figure 1,
- Figure 9 is a view of the upper surface of the lid from which the first and second members have been removed,
- Figure 10 is a view of the lid of the device of Figure 1 in a drinking state operation,
- Figure 11 is a view of the lid of the device of Figure 1 in a mixing state operation,
- Figure 12 is a view of the lid of the device of Figure 1 illustrating both levers in their opening state.

### Detailed description of the drawings

**Figure 1** illustrates a device 1 according to the invention. The device is configured for preparing a beverage and storing this beverage. The device is configured for being transported in order to enable the consumer to drink on the go while travelling.

The device comprises a container body 2 to store the beverage. Generally this container body is made of an insulated material in order to keep the beverage at the desired temperature. Usually, the device is non disposable.

The device comprises a lid 3 to close the container body 2. This lid closes the device and is configured for enabling the consumer to drink therethrough. Accordingly the lid comprises an opening for drinking. In Figure 1, this opening is closed by a movable member 41.

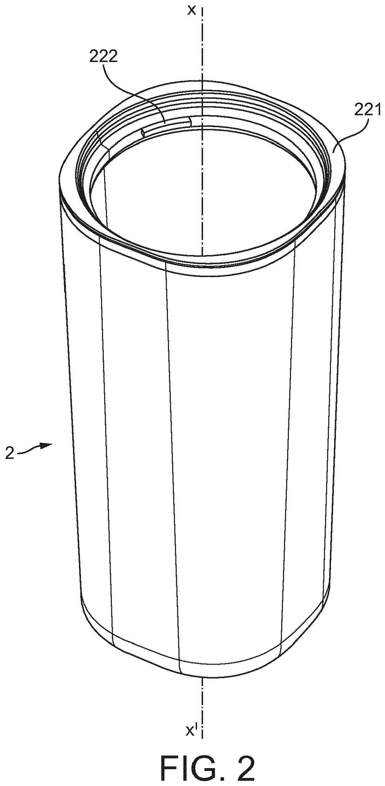

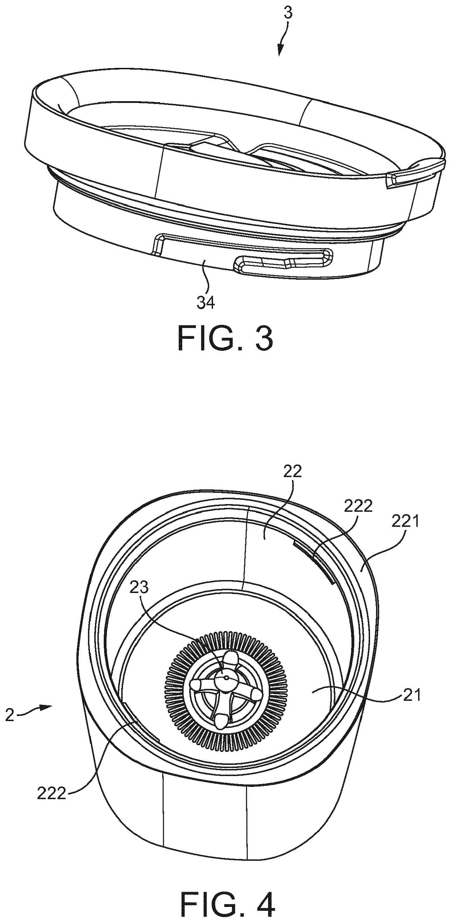

As illustrated in **Figures 2** **and** **3** the container body 2 presents at its upper edge 221 means 222 for attaching the lid 3 to said edge and the lid 3 comprises corresponding cooperating attaching means 34. In the illustrated embodiment, the cooperating attaching means are bulges 222 and tracks 34. Yet any other current attaching means can be used like screwing means or snap fitting means.

Figure 2 shows how the container extends upwardly and longitudinally along an axis XX'.

**Figure 4** illustrates the inside of the container body. At the bottom, the container body 2 comprises a floor 21. The sidewall 22 extends therefrom upwardly and longitudinally to the upper edge 221.

As illustrated in **Figure 4**, the device 1 comprises a mixing device 23 within the container body 2. Preferably, and as illustrated, the mixing device 23 is positioned at or close to the floor 21 of the container body. Generally, the mixing device is rotated around the longitudinal axis XX' of the container body. As a result, during rotation, beverage rotates in the container body and swirls along the sidewall 22 of the container body. Depending on the volume of beverage and the speed of rotation, the swirl can reach the upper edge 221 of the container body.

The mixing device can be a whisk, a whipper, a stirrer or any other device known for agitating a beverage. The mixing device can be directly attached to the shaft of a rotating motor extending through the floor 21 of the container body. In the preferred embodiment, the device 1 can comprise magnetic drive means positioned under the floor 21 to impart a drive to the mixing device located in the container body without mechanical connection member intruding through the floor 21. A simple positioning element can raise from the floor to position the mixing element in relation to the magnetic field.

In the preferred embodiment, the device 1 comprises magnetic drive means providing indirect coupling with the mixing device. The drive means comprises a motor positioned under the floor and actuating the rotation a shaft. The shaft extends along the longitudinal axis XX'. The end of the shaft comprises two elements made of ferro-magnetic material. As a result, the rotation of the shaft induces a rotary magnetic field. The mixing device 23 comprises two elements made of ferro-magnetic material. These elements are slaved to the magnetic field induced by the rotation of the shaft.

Generally, the device 1 comprises at least one actuating button (not represented) to initiate the beverage preparation. Preferably the device 1 comprises a heating device for heating the beverage hold in the container body. This heating device can be positioned under the floor 21 of the container body, yet the heating device can also be positioned in a part of the sidewall 22 of the container body.

According to a less preferred embodiment, the device can be deprived of heating device. Hot water or other hot liquid can be previously heated, for example with a kettle, before being introduced in the device for beverage preparation. This preparation can generate vapor and steam in the device too.

Generally, the motor for actuating the mixing device, the heating device, the battery for supplying these devices with energy are positioned under the floor of the container body at the bottom of the device. In an alternative embodiment, some of these features, in particular the motor, can be comprised in a docking station. The device is able to cooperate with the this docking station during beverage preparation.

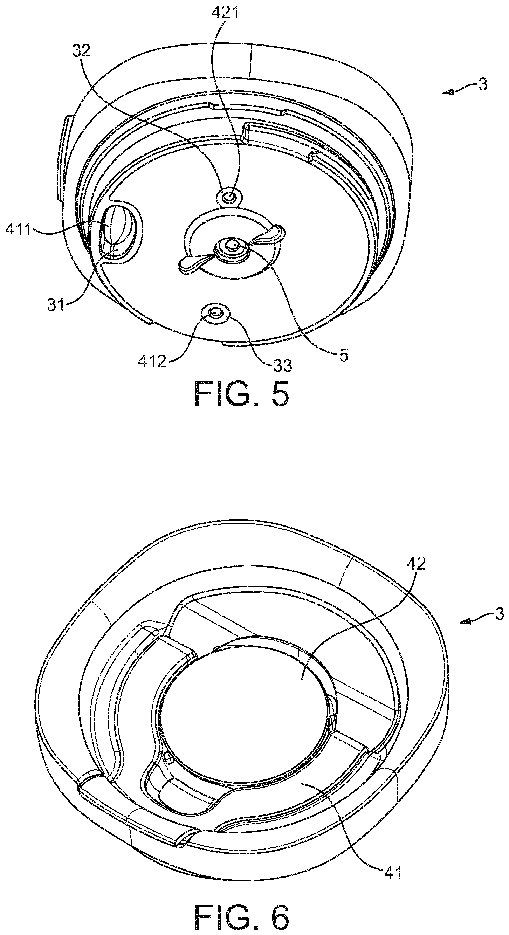

Figures 5 and 6 are respectively bottom and top views of the lid 3 of the device.

The lower and internal side of the lid illustrated in **Figure 5** shows different openings in the lid. These openings traverses the lid and enable the passage of fluids therethrough.

A first opening 31 is the beverage outlet enabling the passage of beverage out of the device when the consumer drinks the beverage. It is positioned on the lateral side of the lid so that the consumer can sip the beverage when the device is inclined and the user puts his/her lip on the lateral edge of the lid. For example, at the upper and external side of the lid, this first opening can be positioned so that its edge closest to the edge of the lid is at a distance of less than 2 cm, even more preferably less than 1 cm, from the edge of the lid. The surface of this opening is sufficiently large to enable drinking, for example this surface can be of about 80 mm².

A second opening 32 is an air port or vent hole. It is configured for releasing gas - usually steam - that can be produced during the beverage preparation. It is positioned far from the edge of the lid. As a result, compared to the first opening 31, it is positioned at a distance closer to the centre of the lid. It is preferably close to or in the area of the centre of the lid. Most preferably, it is positioned at the centre of the lid. Indeed, since during beverage preparation, the mixing device creates a swirl of beverage along the lateral side wall of the container body, this opening shall be far from the lateral edge of the lid to avoid that beverage passes therethrough which would dirty the external side of the lid. The precise position of the second opening can depend on the specific cross section of the container body and on the shape of the swirl generated by the specific mixing device present in the device. The surface of this opening is rather small since it is configured for the passage of gases only like air, steam or vapour. The surface of this second opening is usually smaller than the surface of this first opening. For example, the surface of the second opening can be of about 5 mm².

A third illustrated opening 33 is an air port. It is configured for letting air flow in the container body while the consumer drinks beverage from the first opening 31. Drinking is facilitated. This port can present the same size as the second opening.

Lastly, the lid comprises a pressure relief valve 5. This valve aims to release pressure in case the second opening 32 remains closed due to the presence of residues or by inadvertence of the consumer.

At its upper and external side illustrated in **Figure 6**, the lid comprises a first member 41 configured for closing or opening the first opening 31. This member is a plate movable between two positions : here it is represented in first closing position. As illustrated in Figure 5, the first member simultaneously closes the first opening 31 by means of a plug 411 and the third opening 33 by means of another plug 412.

At its upper and external side illustrated in Figure 6, the lid comprises a second member 42 configured for closing or opening the second opening 32. This member is a plate movable between two positions : here it is represented in its first closing position. As illustrated in Figure 5, the second member closes the second opening 32 by means of a plug 421.

In the configuration illustrated in Figures 5 and 6, the lid 3 enables the consumer to travel with the device without any risk of beverage leaking from any of the openings of the lid.

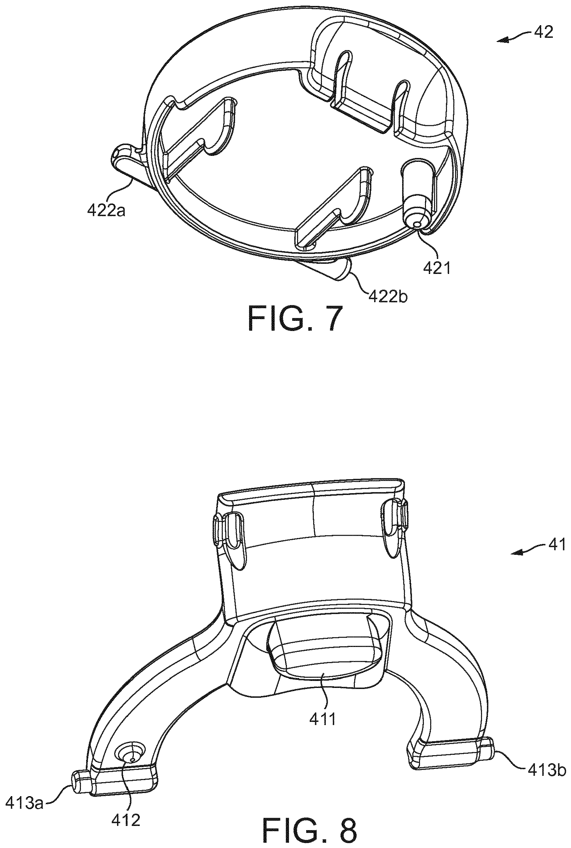

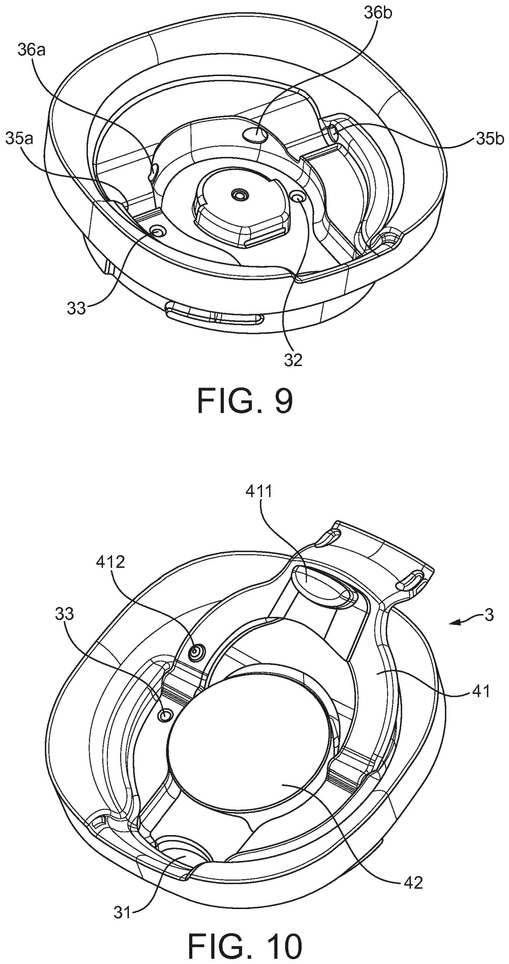

**Figure 7** is an isolated view of the second member 42. From the lower surface of the plate extends a plug 421 positioned so as to be able to slide inside the second opening 32 of the lid and hermetically close it. The plate is hingely attached to the external surface of the lid : it comprises two pins 422a, 422b designed to cooperate with two holes 34a, 34b provided in the upper surface of the lid as illustrated in **Figure 9****.**

**Figure 8** is an isolated view of the first member 41. From the lower surface of the plate 41 extends a plug 411 positioned so as to be able to slide inside the first opening 31 of the lid and hermetically close it. The plate is hingely attached to the external surface of the lid. It comprises two pins 413a, 413b designed to cooperate with corresponding holes 35a, 35b provided in the upper surface of the lid as illustrated in Figure 9.

From the lower surface of the plate 41 extends another plug 412 positioned so as to be able to slide inside the third opening 33 of the lid and hermetically close it.

**Figure 10** is a view of the lid in a drinking state operation : the consumer has pushed up the first member 41 in order to open the beverage outlet. The first member 41 is positioned in its second opening position and as a result :
- the first opening 31 corresponding to the beverage outlet is opened, and
- the third opening 33 enabling the introduction of air during drinking is opened too.

The second position of the first member 41 is configured so as to not hamper the customer during drinking. Indeed, the first member 41 rotates by about 180° so as to extend along the surface of the lid in its second opening position.

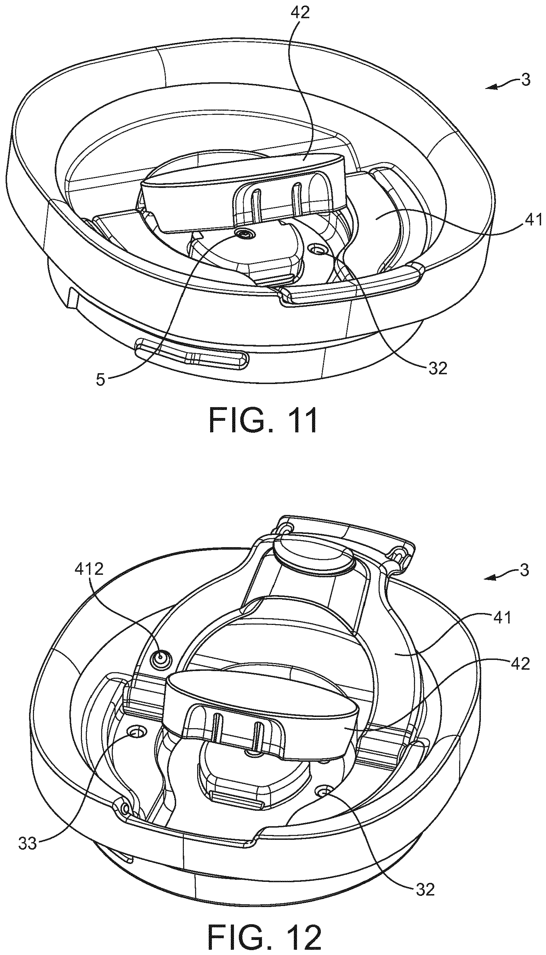

In this drinking state operation, the second member 42 is preferably positioned in its first closing position. It can be noticed that the second member can be positioned in its second opening position without impacting the drinking operation, as illustrated in **Figure 12****.** Yet depending on the orientation of the second member 42 in its opening position, this member may hamper the consumer during drinking.

**Figure 11** is a view of the lid in a beverage preparation state operation. The consumer has positioned the first member in its first closing position and as result the first opening designing the beverage outlet is closed. The third opening 33 is closed by the first member too.

The consumer has also pushed up the second member 42 : the second member 42 is positioned in its second opening position and, as a result, the second opening 32 corresponding to an air port through the lid between the container body and the atmosphere is opened.

In this beverage preparation state operation, the beverage can be mixed without any risk that pressure raises in the container body. In addition, the risk that beverage overflows through the second opening is limited because the swirl of beverage usually reaches the lateral side of the lid only

Simultaneously, this air port enables the presence of air in the device during mixing and the ability to froth the beverage during mixing.

The device of the present invention presents the advantage of enabling beverage preparation, travelling and drinking in safe conditions, in particular avoiding aby beverage leaking.

Although the invention has been described with reference to the above illustrated embodiments, it will be appreciated that the invention as claimed is not limited in any way by these illustrated embodiments.

Variations and modifications may be made without departing from the scope of the claims.

As used in this specification, the words "comprises", "comprising", and similar words, are not to be interpreted in an exclusive or exhaustive sense. In other words, they are intended to mean "including, but not limited to".

### List of references in the drawings :

| | | | |
|---|---|---|---|
| device | | | 1 |
| container body | | | 2 |
| | floor | | 21 |
| | sidewall | | 22 |
| | | upper edge | 221 |
| | | bulge | 222 |
| | mixing device | | 23 |
| lid | | | 3 |
| | first opening | | 31 |
| | second opening | | 32 |
| | third opening | | 33 |
| | track | | 34 |
| | hole | | 35a, 35b, 36a, 36b |
| | first member | | 41 |
| | | plug | 411, 412 |
| | | pin | 413a, 413b |
| | second member | | 42 |
| | | plug | 421 |
| | | pin | 422a, 422b |
| pressure relief valve | | | 5 |

## Claims

1. Device (1) for mixing, storing and drinking a beverage comprising :
- a container body (2), comprising a floor (21) and a sidewall (22) extending upwardly and longitudinally from the floor to an upper edge (221),
- a mixing device (23) positioned within the container body,
- a removable lid (3) configured for cooperating with the upper edge (221) of the container body and closing said container,
- said lid comprising :
. at least two openings,
. one first opening (31) being configured as a beverage outlet, and, said first opening being positioned on the lateral side of the lid, and
. one second opening (32) being configured as an air port, said second opening being in the area of the centre of the lid,
**characterized in that** the lid further comprises:
. a first member (41) configured for closing or opening the first opening (31) and movable between a first closing position and a second opening position,
. a second member (42) configured for closing or opening the second opening (32) and movable between a first closing position and a second opening position,
a third opening (33), said third opening being configured as an air port and said third opening being positioned so that the first member (41) closes or opens said third opening (33) when the first member (41) is moved to the first closing position of said first member or to the second opening position of said first member respectively.

2. Device according to Claim 1, wherein said device comprises a heating device.

3. Device according to Claim 1 or 2, wherein the mixing device (23) is configured for rotating around the longitudinal axis (XX') of the container body.

4. Device according to any one of the precedent claims, wherein, when the first member (41) is in the first closing position of said first member, the second member (42) is freely movable between the first position of said second member and the second position of said second member

5. Device according to any one of the precedent claims, wherein the first movable member (41) comprises a plug (411) adapted to locate in the first opening (31) of the lid when the first member is in its first closing position.

6. Device according to any one of the precedent claims, wherein the second movable member (42) comprises a plug (421) adapted to locate in the second opening (32) of the lid when the second member is in its first closing position.

7. Device according to any one of the precedent claims, wherein at least one of the movable members (41, 42) is pivotally mounted on the lid (3), even more preferably both movable members are pivotally mounted on the lid.

8. Device according to any one of the precedent claims, wherein the first movable member (41) comprises a plug (412) adapted to locate in the third opening (33) of the lid when the first member is in the first closing position of said first member.

9. Device according to any one of the precedent claims, wherein the first and the second members (41, 42) are configured so that the movements of the first and the second members are independent from one another.

10. Device according to any one of the precedent claims, wherein :
- each of the first and the second members (41, 42) is pivotally mounted on the lid (3), and
- the second member (42) is centred on the top of the lid, and
- the first member (41) surrounds the second member (42), and
- the lid (3) comprises a third opening (33) configured as an air port and positioned under the first member (41), and
- the first and the second members (41, 42) are movable independently on each other.

11. Device according to any one of Claims 1 to 7, wherein the movement of the second member (42) to the second opening position of said second member induces the movement of the first member (41) to the second opening position of said first member.

12. Device according to the precedent claim, wherein :
- each of the first and second members (41 42) is pivotally attached to the upper surface of the lid, and
- the second member partially leans on the first member so that, when the first member (41) is moved to the second opening position of said first member, the first member simultaneously moves the second member (42) to the second opening position of said second member.

13. Device according to the precedent claim, wherein :
- each of the first and the second members (41, 42) is pivotally mounted on the lid, and
- the second member (42) is centred on the top of the lid, and
- the first member (41) surrounds the second member at least partially, and
- a part of the bottom surface of the second member leans on a part of the upper surface of the first member.

14. Device according to any one of the precedent claims, wherein the lid (3) comprises a safety pressure valve (5).

## Patentansprüche

1. Vorrichtung (1) zum Mischen, Aufbewahren und Trinken eines Getränks, umfassend:
- einen Behälterkörper (2), umfassend einen Boden (21) und eine Seitenwand (22), die sich nach oben und in Längsrichtung von dem Boden zu einem oberen Rand (221) erstreckt,
- eine Mischvorrichtung (23), die innerhalb des Behälterkörpers positioniert ist,
- einen abnehmbaren Deckel (3), der zum Zusammenwirken mit dem oberen Rand (221) des Behälterkörpers und Schließen des Behälters konfiguriert ist,
- der Deckel umfassend:
. mindestens zwei Öffnungen,
. wobei eine erste Öffnung (31) als ein Getränkeauslass konfiguriert ist und die erste Öffnung an der lateralen Seite des Deckels positioniert ist und
. eine zweite Öffnung (32) als ein Luftloch konfiguriert ist, wobei sich die zweite Öffnung in dem Bereich des Zentrums des Deckels befindet,
**dadurch gekennzeichnet, dass** der Deckel ferner umfasst:
. ein erstes Element (41), das zum Schließen oder Öffnen der ersten Öffnung (31) konfiguriert und zwischen einer ersten Schließposition und einer zweiten Öffnungsposition bewegbar ist,
. ein zweites Element (42), das zum Schließen oder Öffnen der zweiten Öffnung (32) konfiguriert und zwischen einer ersten Schließposition und einer zweiten Öffnungsposition bewegbar ist,
eine dritte Öffnung (33), wobei die dritte Öffnung als ein Luftloch konfiguriert ist und die dritte Öffnung so positioniert ist, dass das erste Element (41) die dritte Öffnung (33) schließt oder öffnet, wenn das erste Element (41) in die erste Schließposition des ersten Elements beziehungsweise in die zweite Öffnungsposition des ersten Elements bewegt wird.

2. Vorrichtung nach Anspruch 1, wobei die Vorrichtung eine Heizvorrichtung umfasst.

3. Vorrichtung nach Anspruch 1 oder 2, wobei die Mischvorrichtung (23) zum Drehen um die Längsachse (XX') des Behälterkörpers herum konfiguriert ist.

4. Vorrichtung nach einem der vorstehenden Ansprüche, wobei, wenn sich das erste Element (41) in der ersten Schließposition des ersten Elements befindet, das zweite Element (42) zwischen der ersten Position des zweiten Elements und der zweiten Position des zweiten Elements frei bewegbar ist

5. Vorrichtung nach einem der vorstehenden Ansprüche, wobei das erste bewegbare Element (41) einen Stopfen (411) umfasst, der angepasst ist, um sich in der ersten Öffnung (31) des Deckels anzuordnen, wenn sich das erste Element in seiner ersten Schließposition befindet.

6. Vorrichtung nach einem der vorstehenden Ansprüche, wobei das zweite bewegbare Element (42) einen Stopfen (421) umfasst, der angepasst ist, um sich in der zweiten Öffnung (32) des Deckels anzuordnen, wenn sich das zweite Element in seiner ersten Schließposition befindet.

7. Vorrichtung nach einem der vorstehenden Ansprüche, wobei mindestens eines der bewegbaren Elemente (41, 42) an dem Deckel (3) schwenkbar montiert ist, noch mehr bevorzugt beide bewegbaren Elemente an dem Deckel schwenkbar montiert sind.

8. Vorrichtung nach einem der vorstehenden Ansprüche, wobei das erste bewegbare Element (41) einen Stopfen (412) umfasst, der angepasst ist, um sich in der dritten Öffnung (33) des Deckels anzuordnen, wenn sich das erste Element in der ersten Schließposition des ersten Elements befindet.

9. Vorrichtung nach einem der vorstehenden Ansprüche, wobei das erste und das zweite Element (41, 42) so konfiguriert sind, dass die Bewegungen des ersten und des zweiten Elements voneinander unabhängig sind.

10. Vorrichtung nach einem der vorstehenden Ansprüche, wobei:
- jedes des ersten und des zweiten Elements (41, 42) an dem Deckel (3) schwenkbar montiert ist und
- das zweite Element (42) an dem obersten Ende des Deckels zentriert ist und
- das erste Element (41) das zweite Element (42) umgibt und
- der Deckel (3) eine dritte Öffnung (33) umfasst, die als ein Luftloch konfiguriert und unter dem ersten Element (41) positioniert ist, und
- das erste und das zweite Element (41, 42) unabhängig voneinander bewegbar sind.

11. Vorrichtung nach einem der Ansprüche 1 bis 7, wobei die Bewegung des zweiten Elements (42) in die zweite Öffnungsposition des zweiten Elements die Bewegung des ersten Elements (41) in die zweite Öffnungsposition des ersten Elements induziert.

12. Vorrichtung nach dem vorstehenden Anspruch, wobei:
- jedes des ersten und des zweiten Elements (41, 42) an der oberen Oberfläche des Deckels schwenkbar angebracht ist und
- sich das zweite Element an das erste Element so teilweise lehnt, dass, wenn das erste Element (41) in die zweite Öffnungsposition des ersten Elements bewegt wird, das erste Element das zweite Element (42) in die zweite Öffnungsposition des zweiten Elements gleichzeitig bewegt.

13. Vorrichtung nach dem vorstehenden Anspruch, wobei:
- jedes des ersten und des zweiten Elements (41, 42) an dem Deckel schwenkbar montiert ist und
- das zweite Element (42) an dem obersten Ende des Deckels zentriert ist und
- das erste Element (41) das zweite Element mindestens teilweise umgibt und
- sich ein Teil der unteren Oberfläche des zweiten Elements an einen Teil der oberen Oberfläche des ersten Elements lehnt.

14. Vorrichtung nach einem der vorstehenden Ansprüche, wobei der Deckel (3) ein Sicherheitsdruckventil (5) umfasst.

## Revendications

1. Dispositif (1) destiné à mélanger, stocker et boire une boisson comprenant :
- un corps de contenant (2), comprenant un fond (21) et une paroi latérale (22) s'étendant vers le haut et longitudinalement du fond jusqu'à un bord supérieur (221),
- un dispositif de mélange (23) positionné au sein du corps de contenant,
- un couvercle amovible (3) conçu pour coopérer avec le bord supérieur (221) du corps de contenant et fermer ledit contenant,
- ledit couvercle comprenant :
. au moins deux ouvertures,
. une première ouverture (31) étant conçue en guise de sortie de boisson, et, ladite première ouverture étant positionnée sur le côté latéral du couvercle, et
une deuxième ouverture (32) étant conçue en guise d'orifice d'air, ladite deuxième ouverture étant dans la zone du centre du couvercle,
**caractérisé en ce que** le couvercle comprend en outre :
. un premier élément (41) conçu pour fermer ou ouvrir la première ouverture (31) et mobile entre une première position de fermeture et une seconde position d'ouverture,
. un second élément (42) conçu pour fermer ou ouvrir la deuxième ouverture (32) et mobile entre une première position de fermeture et une seconde position d'ouverture,
une troisième ouverture (33), ladite troisième ouverture étant conçue en guise d'orifice d'air et ladite troisième ouverture étant positionnée de sorte que le premier élément (41) ferme ou ouvre ladite troisième ouverture (33) lorsque le premier élément (41) est déplacé jusqu'à la première position de fermeture dudit premier élément ou jusqu'à la seconde position d'ouverture dudit premier élément respectivement.

2. Dispositif selon la revendication 1, dans lequel ledit dispositif comprend un dispositif de chauffage.

3. Dispositif selon la revendication 1 ou 2, dans lequel le dispositif de mélange (23) est conçu pour entrer en rotation autour de l'axe longitudinal (XX') du corps de contenant.

4. Dispositif selon l'une quelconque des revendications précédentes, dans lequel, lorsque le premier élément (41) est dans la première position de fermeture dudit premier élément, le second élément (42) est librement mobile entre la première position dudit second élément et la seconde position dudit second élément.

5. Dispositif selon l'une quelconque des revendications précédentes, dans lequel le premier élément mobile (41) comprend un bouchon (411) adapté pour se placer dans la première ouverture (31) du couvercle lorsque le premier élément est dans sa première position de fermeture.

6. Dispositif selon l'une quelconque des revendications précédentes, dans lequel le second élément mobile (42) comprend un bouchon (421) adapté pour se placer dans la deuxième ouverture (32) du couvercle lorsque le second élément est dans sa première position de fermeture.

7. Dispositif selon l'une quelconque des revendications précédentes, dans lequel au moins l'un parmi les éléments mobiles (41, 42) est monté de manière pivotante sur le couvercle (3), encore plus préférablement les deux éléments mobiles sont montés de manière pivotante sur le couvercle.

8. Dispositif selon l'une quelconque des revendications précédentes, dans lequel le premier élément mobile (41) comprend un bouchon (412) adapté pour se placer dans la troisième ouverture (33) du couvercle lorsque le premier élément est dans la première position de fermeture dudit premier élément.

9. Dispositif selon l'une quelconque des revendications précédentes, dans lequel les premier et second éléments (41, 42) sont conçus de sorte que les mouvements des premier et second éléments sont indépendants l'un de l'autre.

10. Dispositif selon l'une quelconque des revendications précédentes, dans lequel :
- chacun des premier et second éléments (41, 42) est monté de manière pivotante sur le couvercle (3), et
- le second élément (42) est centré sur le dessus du couvercle, et
- le premier élément (41) entoure le second élément (42), et
- le couvercle (3) comprend une troisième ouverture (33) conçue en guise d'orifice d'air et positionnée sous le premier élément (41), et
- les premier et second éléments (41, 42) sont mobiles indépendamment l'un de l'autre.

11. Dispositif selon l'une quelconque des revendications 1 à 7, dans lequel le mouvement du second élément (42) jusqu'à la seconde position d'ouverture dudit second élément induit le mouvement du premier élément (41) jusqu'à la seconde position d'ouverture dudit premier élément.

12. Dispositif selon la revendication précédente, dans lequel :
- chacun des premier et second éléments (41, 42) est fixé de manière pivotante à la surface supérieure du couvercle, et
- le second élément s'appuie partiellement sur le premier élément de sorte que, lorsque le premier élément (41) est déplacé jusqu'à la seconde position d'ouverture dudit premier élément, le premier élément déplace simultanément le second élément (42) jusqu'à la seconde position d'ouverture dudit second élément.

13. Dispositif selon la revendication précédente, dans lequel :
- chacun des premier et second éléments (41, 42) est monté de manière pivotante sur le couvercle, et
- le second élément (42) est centré sur le dessus du couvercle, et
- le premier élément (41) entoure le second élément au moins partiellement, et
- une partie de la surface inférieure du second élément s'appuie sur une partie de la surface supérieure du premier élément.

14. Dispositif selon l'une quelconque des revendications précédentes, dans lequel le couvercle (3) comprend une soupape de pression de sûreté (5).
